# EUROPÄISCHE PATENTSCHRIFT

(11) **EP 3 511 583 B1**
(45) Veröffentlichungstag und Bekanntmachung des Hinweises auf die Patenterteilung: **12.05.2021**
(21) Anmeldenummer: 18213028.6
(22) Anmeldetag: 17.12.2018
(51) Int. Cl.: F16C 11/06, F16J 3/04

(54) **DICHTUNGSBALG**
SEALING BELLOW
SOUFFLET D'ÉTANCHÉITÉ

(30) Priorität: 10.01.2018 DE 102018000128
(43) Veröffentlichungstag der Anmeldung: 17.07.2019
(73) Patentinhaber: Carl Freudenberg KG, 69469 Weinheim (DE)
(72) Erfinder: Knorr, Rainer, 10557 Berlin (DE); Idies, Nedal, 12105 Berlin (DE)

(56) Entgegenhaltungen:
- EP-A1- 2 080 941
- WO-A1-02/077470
- DE-A1- 4 209 646
- US-A- 5 466 084
- US-A1- 2015 030 376

## Beschreibung

### Technisches Gebiet

Die Erfindung betrifft einen Dichtungsbalg, umfassend einen Mantel aus einem gummielastischen Werkstoff, der stirnseitig beiderseits jeweils einen Randbereich aufweist, wobei in zumindest einem der Randbereiche ein Spannring zur Befestigung des Dichtungsbalgs angeordnet ist, wobei der Spannring ohne chemische Bindung ausschließlich formschlüssig im Randbereich angeordnet ist, wobei der Spannring, im Längsschnitt des Dichtungsbalgs betrachtet, im wesentlichen L-förmig ausgebildet ist, mit einem Axialschenkel und einem Radialschenkel, wobei der Spannring Durchbrechungen aufweist, die vom gummielastischen Werkstoff des jeweiligen Randbereichs durchdrungen sind und wobei die Durchbrechungen im Axialschenkel und im Radialschenkel gleichmäßig in Umfangsrichtung verteilt angeordnet sind.

### Stand der Technik

Ein solcher Dichtungsbalg ist aus der DE 42 09 646 A1 bekannt.
Der Dichtungsbalg ist als Schutzkappe für einen Bremszylinder einer Scheibenbremse ausgebildet, wobei der Dichtungsbalg axial einerseits einen Befestigungswulst aufweist und axial andererseits eine Versteifungseinlage in Form eines Ringes umfasst, der zumindest teilweise von dem Material des Dichtungsbalgs umgeben ist.
Der Ring weist Durchbrechungen auf und ist in einer einseitig offenen, ringförmigen Tasche angeordnet. Die Durchbrechungen sind von dem Material des Dichtungsbalgs durchdrungen. Auf eine adhäsive Verbindung zwischen dem Material des Dichtungsbalgs und dem Ring wird verzichtet. Stattdessen wird durch das Eindringen des Materials des Dichtungsbalgs in die Durchbrechungen des Rings ein Formschluss geschaffen, der beide Bauteile fest miteinander verbindet. Hierdurch kann der Ring ohne das Erfordernis besonderer Maßnahmen zur Erzeugung einer Adhäsion mit dem Material des Dichtungsbalgs umspritzt werden.

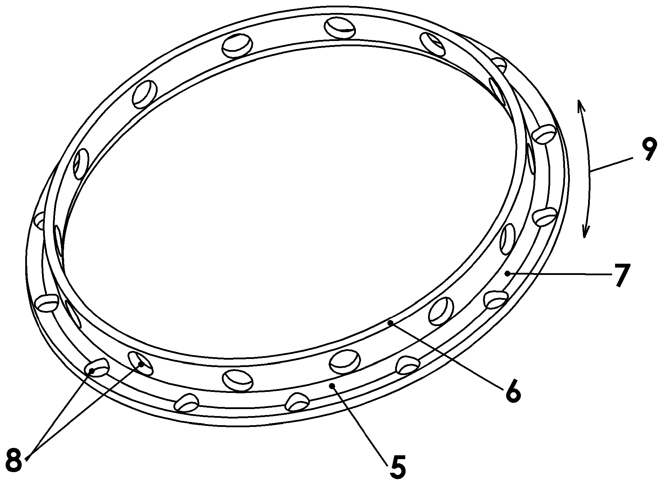

Ein weiterer Dichtungsbalg ist aus der FR 2 754 024 A1 bekannt. Der vorbekannte Dichtungsbalg umfasst ebenfalls die Merkmale aus dem Oberbegriff von Patentanspruch 1, wobei insbesondere die Durchbrechungen im Axialschenkel und im Radialschenkel gleichmäßig in Umfangsrichtung verteilt angeordnet sind.
In Umfangsrichtung betrachtet, sind die Durchbrechungen im Axialschenkel und im Radialschenkel, wie in Figur 3 dargestellt, in einer gemeinsamen Radialebene angeordnet.

Ein weiterer Dichtungsbalg ist aus der DE 10 2006 039 861 A1 bekannt. Stirnseitig beiderseits des Mantels sind die Randbereiche angeordnet, die einstückig ineinander übergehend und materialeinheitlich mit dem Mantel ausgebildet sind. Der Mantel des vorbekannten Dichtungsbalgs weist mehrere Falten auf. Der Dichtungsbalg ist als Faltenbalg ausgebildet.
In beiden Randbereichen ist jeweils ein Spannring angeordnet. Einer der Randbereiche umschließt einen Kugelzapfen eines Kugelgelenks dichtend, und der andere Randbereich ist dichtend mit einem Gehäuse verbunden. Die Gelenkkugel des Kugelgelenks ist innerhalb des Gehäuses drehbeweglich und schwenkbar gelagert.
Die Einbettung der Spannringe in die Randbereiche erfolgt während eines Vulkanisationsprozesses derart, dass die aus einem metallischen Werkstoff bestehenden Spannringe vorab mit einem Haftvermittler beschichtet werden, der später für eine stoffschlüssige Verbindung zum gummielastischen Werkstoff der Randbereiche notwendig ist.
Zur Herstellung des vorbekannten Dichtungsbalgs werden die mit dem Haftvermittler versehenen Spannringe in ein Vulkanisationswerkzeug eingelegt, positioniert und anschließend mit dem gummielastischen Werkstoff, aus dem der Mantel und seine Randbereiche bestehen, umspritzt bzw. umströmt. Nach Beendigung des Vulkanisationsprozesses wird der Dichtungsbalg aus dem Vulkanisationswerkzeug entformt.
Die Beschichtung der Spannringe mit einem Haftvermittler ist aufwändig, kostenintensiv und umweltbelastend.
Um die Spannringe mit einem Haftvermittler zu beschichten, bedarf es des Einsatzes verschiedener Chemikalien und Maschinen. Abgesehen davon, dass eine solche Vorbehandlung der Spannringe mit dem Haftvermittler aufwändig, auch energieaufwändig, und teuer ist, entstehen durch die Vorbehandlung des Spannrings mit Haftvermittler beträchtliche Mengen an verunreinigten Chemikalien, die als Sondermüll entsorgt oder in einem aufwändigen Wiederverwertungsprozess aufbereitet werden müssen.

In Figur 3 der DE 10 2006 039 861 A1 ist ein Spannring offenbart, der an seinem radial inneren Ende Haltekrallen aufweist, die einander in Umfangsrichtung mit Abstand benachbart zugeordnet sind. Die Ausnehmungen, durch die die Haltekrallen in Umfangsrichtung voneinander beabstandet sind, sind im Wesentlichen halbkreisförmig ausgebildet und radial nach innen offen. Die Haltekrallen sorgen für eine sichere Fixierung des entsprechenden Randbereichs auf einem korrespondierenden Bauteil eines Kugelgelenks. Der Randbereich, in dem ein solcher Stützring angeordnet ist, ist auf diese Weise zuverlässig gegen ein unerwünschtes axiales Auswandern gesichert.

Ein weiterer Dichtungsbalg ist aus der EP 2 711 593 A1 bekannt. Die bei diesem Dichtungsbalg zur Anwendung gelangenden Spannringe bestehen aus einem zähharten, metallischen Werkstoff und sind vom gummielastischen Werkstoff der jeweiligen Befestigungsbereiche vollständig umschlossen. Durch die Anordnung der Spannringe in den Randbereichen, die die Befestigungsbereiche für den Dichtungsbalg bilden, sind die jeweiligen Spannringe gegen Korrosion, Verlust oder mechanischen Beschädigungen, wie zum Beispiel Steinschlag, geschützt.
Außerdem ist von Vorteil, dass durch die Integration der Spannringe eine Beschädigung des Randbereichs, insbesondere des Dichtbereichs, durch Montage externer, bandförmiger Spannelemente ausgeschlossen ist.

Aus der US 2015/0030376 A1 ist ein weiterer Dichtungsbalg bekannt, bei dem ein Mantel aus einem gummielastischen Werkstoff mit seinen stirnseitig beiderseits angeordneten Randbereichen jeweils einen Spannring zumindest teilweise umschließt. Die Spannringe sind, im Längsschnitt des Dichtungsbalgs betrachtet, im Wesentlichen L-förmig ausgebildet und weisen einen Axialschenkel und einen Radialschenkel auf. Im Axialschenkel können demnach in sich geschlossen ausgebildete und gleichmäßig in Umfangsrichtung verteilte Durchbrechungen angeordnet sein, die vom gummielastischen Werkstoff des entsprechenden Randbereichs des Mantels durchdrungen sind.

Aus der US 5,466,084 ist ein Dichtungsbalg bekannt, ähnlich den zuvor beschriebenen Dichtungsbälgen, wobei ein im Wesentlichen kreisringförmig ausgebildeter Spannring radial innenseitig Durchbrechungen aufweist, die vom entsprechenden Randbereich des aus einem gummielastischen Werkstoff bestehenden Mantels durchdrungen sind. Dadurch ergibt sich eine formschlüssige Verbindung.

Aus der EP 2 080 941 A1 ist ein weiterer Dichtungsbalg bekannt, mit einem im Wesentlichen L-förmigen Spannring, wobei im Übergangsbereich zwischen dem Axialschenkel und dem Radialschenkel gleichmäßig in Umfangsrichtung verteilte Durchbrechungen angeordnet sind und der Radialschenkel radial innenumfangsseitig etwa halbbogenförmig ausgebildete Ausnehmungen aufweist. Die Durchbrechungen und die Ausnehmungen sind, in Umfangsrichtung betrachtet, an derselben Stelle angeordnet, ähnlich wie im Spannring, der im Dichtungsbalg aus der FR 2 754 024 A1 zur Anwendung gelangt.

### Darstellung der Erfindung

Der Erfindung liegt die Aufgabe zu Grunde, einen Dichtungsbalg der eingangs genannten Art derart weiterzuentwickeln, dass dieser einfach und kostengünstig herstellbar ist und dass Umweltbelastungen durch die Herstellung des Dichtungsbalgs auf ein Minimum reduziert sind. Insbesondere sollen bei der Herstellung des Dichtungsbalgs keine Rückstände entstehen, die als Sondermüll entsorgt oder in einem aufwändigen Wiederverwertungsprozess aufbereitet werden müssen. Außerdem soll eine möglichst gute mechanische Verkrallung zwischen dem Spannring und dem jeweiligen Randbereich erreicht werden, wenn Durchbrechungen im Axialschenkel und im Radialschenkel angeordnet sind.

Diese Aufgabe wird erfindungsgemäß durch einen Dichtungsbalg mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die Durchbrechungen im Axialschenkel und im Radialschenkel einander, in Umfangsrichtung betrachtet, auf Lücke zugeordnet sind.

Die formschlüssige Anordnung der Spannringe im jeweiligen Randbereich ist die einzige Art der Verbindung; eine zusätzliche chemische Bindung gelangt nicht zur Anwendung. Dabei ist von Vorteil, dass der Dichtungsbalg insgesamt einfach, kostengünstig und umweltfreundlich herstellbar ist. Zur Herstellung des Dichtungsbalgs werden nicht-vorbehandelte, insbesondere nicht mit einem Haftvermittler versehene Spannringe in ein Vulkanisationswerkzeug eingelegt, positioniert und anschließend mit dem gummielastischen Werkstoff, aus dem der Mantel und seine Randbereiche bestehen, umspritzt bzw. umströmt. Die ausschließlich formschlüssige und trotzdem dauerhaltbare Verbindung zwischen den Spannringen und dem gummielastischen Werkstoff der jeweiligen Randbereiche wird dadurch erreicht, dass Vorsprünge und Hinterschnitte der Spannringe vom elastomeren Werkstoff umschlossen und dadurch im elastomeren Werkstoff der Randbereiche gehalten sind.
Nach Beendigung des Vulkanisationsprozesses erfolgt die Entformung des gebrauchsfertigen Dichtungsbalgs zusammen mit den von den Randbereichen eingeschlossenen Spannringen aus dem Vulkanisationswerkzeug.
Die Spannringe sind somit im Dichtungsbalg ausschließlich durch Formschluss in ihrer vorgesehenen Position gehalten.

Der Spannring ist, im Längsschnitt des Dichtungsbalgs betrachtet, im Wesentlichen L-förmig ausgebildet, mit einem Axialschenkel und einem Radialschenkel. Durch eine solche L-Form lassen sich die Randbereiche des Dichtungsbalgs besonders einfach und zuverlässig an den jeweils angrenzenden Maschinenelementen festlegen. Durch die Spannelemente werden die Randbereiche unter elastischer Vorspannung an den jeweils angrenzenden Maschinenelementen dichtend festgelegt.
Wie eingangs bereits beschrieben, umschließt einer der Randbereiche zum Beispiel einen Kugelzapfen eines Kugelgelenks, dessen Gelenkkugel innerhalb eines Gehäuses drehbeweglich und schwenkbar gelagert ist. Der andere Randbereich dichtet demgegenüber das Gehäuse statisch ab.

Je stärker die mechanische Verkrallung der Spannringe in dem jeweiligen Randbereich ist, desto besser werden die Spannelemente allein durch den Formschluss in ihrer Position innerhalb der Randbereiche gehalten.

Um eine möglichst gute formschlüssige Verbindung zu erreichen, weist der Spannring Durchbrechungen auf, die vom gummielastischen Werkstoff des jeweiligen Randbereichs durchdrungen sind. Die Durchbrechungen in den Spannringen können durch Stanzen oder Laserschneiden erzeugt werden. Durch die genannten Fertigungsverfahren können kreisförmige, eckige oder beliebige andere Geometrien als Durchbrechungen hergestellt werden.
Die Durchbrechungen sind außenumfangsseitig vollständig von einer Begrenzungswandung umschlossen, die einen Bestandteil des jeweiligen Spannrings bildet. Durch die in sich geschlossene Begrenzungswandung ist der Formschluss der Spannringe im jeweiligen Randbereich besonders stark und haltbar.

Die Durchbrechungen im Axialschenkel und/oder im Radialschenkel sind gleichmäßig in Umfangsrichtung verteilt angeordnet.
Es mag Anwendungsfälle geben, in denen es für eine Positionierung der Spannringe im jeweiligen Randbereich ausreichend ist, dass entweder nur der Axialschenkel oder nur der Radialschenkel Durchbrechungen für eine Verkrallung mit dem gummielastischen Werkstoff des Randbereichs aufweist. Die beste mechanische Verkrallung zwischen den Spannringen und den jeweiligen Randbereichen lässt sich jedoch erzielen, wenn Durchbrechungen im Axialschenkel und im Radialschenkel angeordnet sind. Durch die gleichmäßig in Umfangsrichtung verteilte Anordnung der Durchbrechungen sind die mechanischen Belastungen in den Randbereichen, insbesondere in den Bereichen, in denen die Durchbrechungen vom gummielastischen Werkstoff der Randbereiche durchdrungen sind, vergleichmäßigt; die Gebrauchsdauer verringernde Spannungsspitzen durch eine in Umfangsrichtung betrachtet ungleichmäßige Belastung der Randbereiche ist dadurch ausgeschlossen.

Die Durchbrechungen im Axialschenkel und im Radialschenkel sind einander, in Umfangsrichtung betrachtet, auf Lücke zugeordnet. Dadurch besteht die Möglichkeit, vergleichsweise große Ausnehmungen vorzusehen, um eine möglichst gute formschlüssige Verbindung der Spannringe im jeweiligen Randbereich zu erhalten.
Wären die Durchbrechungen im Axialschenkel und im Radialschenkel in Umfangsrichtung betrachtet an der gleichen Stelle, praktisch einander gegenüberliegend angeordnet, würde sich eine unerwünschte Schwächung des zähharten Werkstoffs ergeben, aus dem die Spannringe bestehen.

Bevorzugt ist es vorgesehen, dass in beiden Randbereichen jeweils ein Spannring angeordnet ist und dass die beiden Spannringe ohne chemische Bindung ausschließlich formschlüssig im jeweiligen Randbereich angeordnet sind.

Die Spannringe bestehen aus einem zähharten Werkstoff.
Gemäß einer vorteilhaften Ausgestaltung kann es vorgesehen sein, dass die Spannringe aus einem metallischen Werkstoff bestehen. Derartige Spannringe sind einfach und kostengünstig herstellbar und deshalb auch für in Großserien hergestellte Dichtungsbälge gut geeignet.

Anstelle eines metallischen Werkstoffs können auch polymere Werkstoffe für die Spannringe zur Anwendung gelangen.

Nach einer vorteilhaften Ausgestaltung kann es vorgesehen sein, dass der Radialschenkel an seinem freien und radial inneren Ende Haltekrallen aufweist, die einander in Umfangsrichtung mit Abstand benachbart zugeordnet sind.
In Abhängigkeit von den jeweiligen Gegebenheiten des Anwendungsfalls können Haltekrallen an einem freien und radial äußeren Ende des Radialschenkels angeordnet sein.

Um trotz der vorgesehenen Haltekrallen eine gute formschlüssige Verbindung zwischen dem Randbereich und dem Spannring zu erhalten, kann es vorgesehen sein, dass in jeder Haltekralle eine Durchbrechung angeordnet ist.

Während der bestimmungsgemäßen Verwendung des Dichtungsbalgs können sich die Haltekrallen in die Oberfläche des korrespondierenden Bauteils eingraben. Bei den korrespondierenden Bauteilen kann es sich, wie zuvor ausgeführt, beispielsweise um einen Kugelzapfen eines Kugelgelenks oder um ein Gehäuse handeln, das die Gelenkkugel des Kugelgelenks umschließt. Dieser einmalige Montagevorgang des Dichtungsbalgs gewährleistet eine sichere Fixierung der Randbereiche an den korrespondierenden und relativ zueinander bewegbaren Bauteilen.

Die zuvor beschriebenen Haltekrallen können generell an nur einem der Spannringe oder an beiden Spannringen vorgesehen sein.

### Kurzbeschreibung der Zeichnung

Ein Ausführungsbeispiel des erfindungsgemäßen Dichtungsbalgs wird nachfolgend anhand der Figuren 1 bis 4 näher beschrieben. Diese zeigen jeweils in schematischer Darstellung:
Figur 1 ein Ausführungsbeispiel des Dichtungsbalgs in perspektivischer Darstellung, wobei die Spannringe zur Verdeutlichung ihrer Gestalt nur teilweise in die Randbereiche eingebettet dargestellt sind,
Figur 2 einen der Spannringe, der den größeren Durchmesser aufweist und bei dem der Radialschenkel Haltekrallen aufweist,
Figur 3 den anderen zur Anwendung gelangenden Spannring, mit relativ kleinerem Durchmesser, der keine Haltekrallen aufweist,
Figur 4 ein Ausführungsbeispiel einer Dichtungsbalg-Anordnung, in der der Dichtungsbalg gemäß Figuren 1 bis 3 zur Anwendung gelangt.

### Ausführung der Erfindung

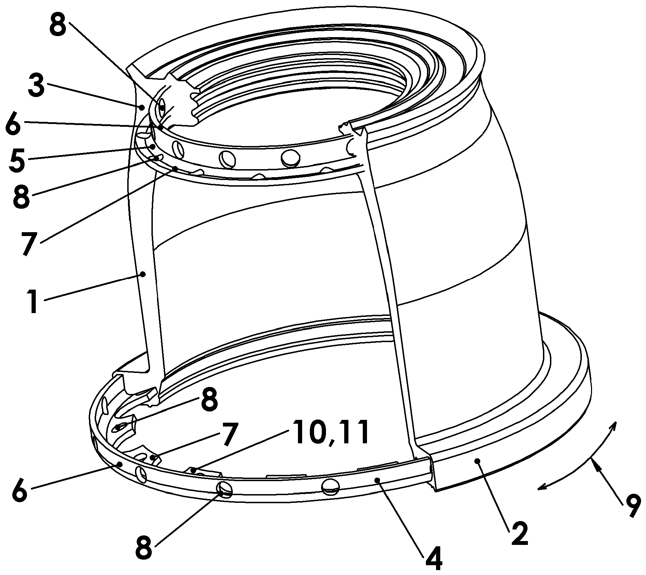

In Figur 1 ist ein erstes Ausführungsbeispiel des Dichtungsbalgs in perspektivischer Darstellung gezeigt. Um die Gestalt der zur Anwendung gelangenden Spannringe 4, 5 in den entsprechenden Randbereichen 2, 3 deutlicher darstellen zu können, sind die Spannringe 4, 5 nur teilweise vom gummielastischen Werkstoff der Randbereiche 2, 3 umschlossen dargestellt. Auch ist zur Verdeutlichung der Erfindung ein Segment aus dem Mantel 1 herausgetrennt.

Mit Ausnahme der Spannringe 4, 5 besteht der Dichtungsbalg materialeinheitlich aus einem gummielastischen Werkstoff. Der Mantel 1 weist in dem gezeigten Ausführungsbeispiel keine Falten auf.
Alternativ kann der Dichtungsbalg als Faltenbalg ausgebildet sein.

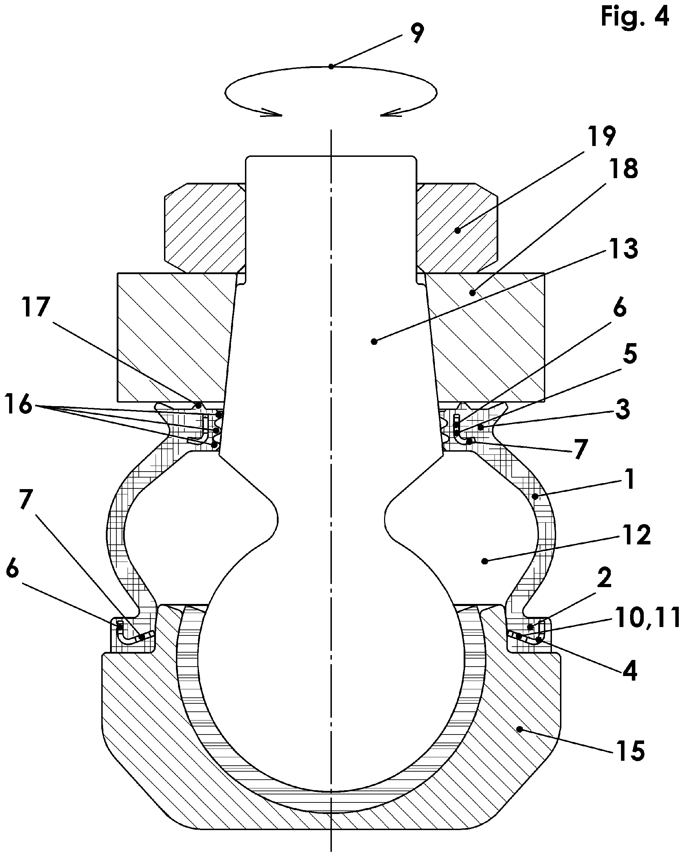

Der eingebaute Zustand des Dichtungsbalgs ist in Figur 4 gezeigt und wird später näher beschrieben.

Die Spannringe 4, 5 sind im gezeigten Ausführungsbeispiel vollständig in die jeweiligen Randbereiche 2, 3 integriert, wobei die Spannringe 4, 5 in den jeweiligen Randbereichen 2, 3 ausschließlich formschlüssig ohne chemische Bindung gehalten sind.
Wie zuvor beschrieben, wird die Herstellung des Dichtungsbalgs dadurch vereinfacht. Der Dichtungsbalg ist einfach und kostengünstig herstellbar, und Chemikalien, die im Anschluss an die Herstellung des Dichtungsbalgs als Sondermüll entsorgt oder einem aufwändigen Wiederverwertungsprozess zugeführt werden müssten, entstehen bei der Herstellung des erfindungsgemäßen Dichtungsbalgs nicht.

Die Spannringe 4, 5 bestehen in dem gezeigten Ausführungsbeispiel aus einem metallischen Werkstoff. Die Durchbrechungen 8 in den Spannringen 4, 5 sind ausgestanzt.

Die beiden Spannringe 4, 5 sind jeweils im Wesentlichen L-förmig ausgebildet und haben jeweils einen Axialschenkel und jeweils einen Radialschenkel. Die Durchbrechungen 8 sind, um einen guten Formschluss der Spannringe 4, 5 in den Randbereichen 2, 3 zu erreichen, sowohl in den Axialschenkeln 6 als auch in den Radialschenkeln 7 vorgesehen und gleichmäßig in Umfangsrichtung 9 verteilt angeordnet.

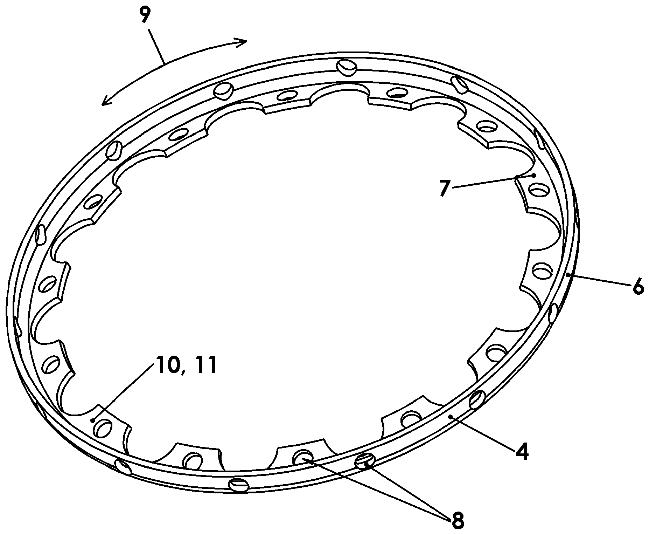

In Figur 2 ist einer der beiden Spannringe 4, 5, nämlich der Spannring 4, gezeigt, mit dem der Dichtungsbalg, wie später zu Figur 4 erläutert, am Gehäuse 15 gehalten ist.
Die Durchbrechungen 8 im Radialschenkel 7 sind in den Haltekrallen 11 angeordnet, wobei die Haltekrallen 11, in Umfangsrichtung 9 betrachtet, zueinander beabstandet sind.

Durch die Haltekrallen 11 kann der Dichtungsbalg besonders zuverlässig und dauerhaltbar am Gehäuse 15 befestigt werden.

In Figur 3 ist der Spannring 5 gezeigt, der im Randbereich 3 angeordnet ist. Dieser Spannring 5 ist im Durchmesser etwas kleiner als der zuvor beschriebene Spannring 4 gemäß Figur 2 und gelangt in dem Randbereich 3 zur Anwendung, der den Kugelzapfen 13 des Kugelgelenks 12 dichtend umschließt.
Der Radialschenkel 7 erstreckt sich bei diesem Spannring 5 radial nach außen, der Axialschenkel 6 demgegenüber im Wesentlichen parallel zur Dichtfläche, mit der der Randbereich 3 den Kugelzapfen 13 des Kugelgelenks 12 dichtend umschließt. Dadurch wird eine gleichmäßige Anpressung des Dichtbereichs an der abzudichtenden Oberfläche erreicht.

Die Durchbrechungen 8 im Axialschenkel 6 und im Radialschenkel 7 der jeweiligen Spannringe 4, 5 sind einander, in Umfangsrichtung 9 betrachtet, auf Lücke zugeordnet. Die Durchbrechungen 8 sind dadurch besonders groß, ohne die Spannringe 4, 5 nachteilig zu schwächen.

In Figur 4 ist der erfindungsgemäße Dichtungsbalg während seiner bestimmungsgemäßen Verwendung im eingebauten Zustand gezeigt. Die Anordnung umfasst ein Kugelgelenk 12 mit einem Kugelzapfen 13, dessen Gelenkkugel 14 innerhalb eines Gehäuses 15 drehbeweglich und schwenkbar gelagert ist. Durch das Spannelement 4 im Randbereich 3 ist der Dichtungsbalg statisch dichtend am Gehäuse 15 befestigt.
Stirnseitig andererseits umschließt der Randbereich 3 den Kugelzapfen 13 des Kugelgelenks 12, wobei der Randbereich 3 radial innenseitig den Kugelzapfen 13 mit Dichtlippen 16 dichtend umschließt. Stirnseitig, auf der dem Randbereich 4 axial abgewandten Seite des Randbereichs 3, ist eine Axialdichtlippe 17 angeordnet, die ein Hebelauge 18 des Kugelgelenks 12 dichtend berührt. Die Dichtlippen 16 und die Axialdichtlippe 17 dichten dynamisch ab. Das Hebelauge 18 wird durch ein Befestigungselement 19 in Form einer Mutter, die auf den Kugelzapfen 13 aufgeschraubt ist, in seiner Position gehalten.

Im eingebauten Zustand wird der Dichtungsbalg, bezogen auf seine Form, die in Figur 1 gezeigt ist, in axialer Richtung gestaucht, so dass sich dadurch in dem hier gezeigten Ausführungsbeispiel eine im Wesentlichen kugelförmige Gestalt des Mantels 1 ergibt.
Davon abweichende Geometrien des Mantels 1, zum Beispiel ein faltenförmiger Mantel mit zwei Falten, sind ebenfalls möglich.

## Patentansprüche

1. Dichtungsbalg, umfassend einen Mantel (1) aus einem gummielastischen Werkstoff, der stirnseitig beiderseits jeweils einen Randbereich (2, 3) aufweist, wobei in zumindest einem der Randbereiche (2, 3) ein Spannring (4, 5) zur Befestigung des Dichtungsbalgs angeordnet ist, wobei der Spannring (4, 5) ohne chemische Bindung ausschließlich formschlüssig im Randbereich (2, 3) angeordnet ist, wobei der Spannring (4, 5), im Längsschnitt des Dichtungsbalgs betrachtet, im wesentlichen L-förmig ausgebildet ist, mit einem Axialschenkel (6) und einem Radialschenkel (7), wobei der Spannring (4, 5) Durchbrechungen (8) aufweist, die vom gummielastischen Werkstoff des jeweiligen Randbereichs (2, 3) durchdrungen sind und wobei die Durchbrechungen (8) im Axialschenkel (6) und im Radialschenkel (7) gleichmäßig in Umfangsrichtung (9) verteilt angeordnet sind, **dadurch gekennzeichnet, dass** die Durchbrechungen (8) im Axialschenkel (6) und im Radialschenkel (7) einander, in Umfangsrichtung (9) betrachtet, auf Lücke zugeordnet sind.

2. Dichtungsbalg nach Anspruch 1, **dadurch gekennzeichnet, dass** in beiden Randbereichen (2, 3) jeweils ein Spannring (4, 5) angeordnet ist und dass die beiden Spannringe (4, 5) ohne chemische Bindung ausschließlich formschlüssig im jeweiligen Randbereich (2, 3) angeordnet sind.

3. Dichtungsbalg nach einem der Ansprüche 1 oder 2, **dadurch gekennzeichnet, dass** die Spannringe (4, 5) aus einem zähharten Werkstoff bestehen.

4. Dichtungsbalg nach einem der Ansprüche 1 bis 3, **dadurch gekennzeichnet, dass** die Spannringe (4, 5) aus einem metallischen Werkstoff bestehen.

5. Dichtungsbalg nach einem der Ansprüche 1 bis 4, **dadurch gekennzeichnet, dass** der Radialschenkel (7) an seinem freien und radial inneren Ende (10) Haltekrallen (11) aufweist, die einander in Umfangsrichtung (9) mit Abstand benachbart zugeordnet sind.

6. Dichtungsbalg nach Anspruch 5, **dadurch gekennzeichnet, dass** in jeder Haltekralle (11) eine Durchbrechung (8) angeordnet ist.

## Claims

1. Seal bellows, comprising a shell (1) composed of a rubber-elastic material, both sides of said shell having a respective edge region (2, 3) at the end side, wherein a clamping ring (4, 5) for fastening of the seal bellows is arranged in at least one of the edge regions (2, 3), wherein the clamping ring (4, 5) is arranged in the edge region (2, 3) in an exclusively form-fitting manner, without a chemical bond, wherein the clamping ring (4, 5), as viewed in the longitudinal section of the seal bellows, is of substantially L-shaped form, with an axial limb (6) and a radial limb (7), wherein the clamping ring (4, 5) has apertures (8) which are penetrated by the rubber-elastic material of the respective edge region (2, 3) and wherein the apertures (8) are arranged in the axial limb (6) and in the radial limb (7) so as to be distributed uniformly in a circumferential direction (9), **characterized in that** the apertures (8) in the axial limb (6) and in the radial limb (7) are, as viewed in the circumferential direction (9), staggered in relation to one another.

2. Seal bellows according to Claim 1, **characterized in that** a respective clamping ring (4, 5) is arranged in the two edge regions (2, 3), and **in that** the two clamping rings (4, 5) are arranged in the respective edge region (2, 3) in an exclusively form-fitting manner, without a chemical bond.

3. Seal bellows according to one of Claims 1 or 2, **characterized in that** the clamping rings (4, 5) are composed of a hard and tough material.

4. Seal bellows according to one of Claims 1 to 3, **characterized in that** the clamping rings (4, 5) are composed of a metallic material.

5. Seal bellows according to one of Claims 1 to 4, **characterized in that** the radial limb (7) has retaining claws (11) at its free and radially inner end (10), said retaining claws being arranged at a spacing adjacent to one another in the circumferential direction (9).

6. Seal bellows according to Claim 5, **characterized in that** an aperture (8) is arranged in each retaining claw (11) .

## Revendications

1. Soufflet d'étanchéité, comprenant une enveloppe (1) composée d'un matériau ayant l'élasticité du caoutchouc, qui présente, sur les deux côtés frontaux à chaque fois une région de bord (2, 3), un collier de serrage (4, 5) étant disposé dans au moins l'une des régions de bord (2, 3) pour fixer le soufflet d'étanchéité, le collier de serrage (4, 5) étant disposé dans la région de bord (2, 3) exclusivement par engagement par coopération de formes sans liaison chimique, le collier de serrage (4, 5), vu en coupe longitudinale du soufflet d'étanchéité, étant réalisé essentiellement en forme de L, avec une branche axiale (6) et une branche radiale (7), le collier de serrage (4, 5) présentant des orifices (8) qui sont traversés par le matériau ayant l'élasticité du caoutchouc de la région de bord respective (2, 3), et les orifices (8) dans la branche axiale (6) et dans la branche radiale (7) étant répartis uniformément dans la direction périphérique (9), **caractérisé en ce que** les orifices (8) dans la branche axiale (6) et dans la branche radiale (7), vu dans la direction périphérique (9), sont disposés en quinconce les uns par rapport aux autres.

2. Soufflet d'étanchéité selon la revendication 1, **caractérisé en ce qu'**un collier de serrage (4, 5) est à chaque fois disposé dans les deux régions de bord (2, 3) et **en ce que** les deux colliers de serrage (4, 5) sont disposés dans la région de bord respective (2, 3) exclusivement par engagement par correspondance de formes sans liaison chimique.

3. Soufflet d'étanchéité selon l'une quelconque des revendications 1 ou 2, **caractérisé en ce que** les colliers de serrage (4, 5) sont constitués d'un matériau tenace.

4. Soufflet d'étanchéité selon l'une quelconque des revendications 1 à 3, **caractérisé en ce que** les colliers de serrage (4, 5) sont constitués d'un matériau métallique.

5. Soufflet d'étanchéité selon l'une quelconque des revendications 1 à 4, **caractérisé en ce que** la branche radiale (7) présente à son extrémité libre et radialement à l'intérieur (10) des griffes de fixation (11) qui sont associées les unes aux autres dans la direction périphérique (9) à distance les unes des autres.

6. Soufflet d'étanchéité selon la revendication 5, **caractérisé en ce qu'**un orifice (8) est réalisé dans chaque griffe de fixation (11).
